# EUROPEAN PATENT APPLICATION

(11) **EP 1 262 773 A1**
(43) Date of publication of application: **04.12.2002**
(21) Application number: 02253647.8
(22) Date of filing: 23.05.2002
(51) Int. Cl.: G01N 30/34

(54) **Cationic ion pairing compositions having volatile combustion products with O or S or halogen atoms or their combinations as heteroatoms for use with gas-phase or vapor-phase element-specific detectors**

(30) Priority: 23.05.2001 US 293149 P; 24.05.2001 US 293340 P
(71) Applicant: THE TEXAS A & M UNIVERSITY SYSTEMS, College Station, TX 77843 (US)
(72) Inventor: Vigh, Gyula, Magnolia, Texas 77355 (US)
(74) Representative: W.P. Thompson & Co.

(57) **Abstract**

Non-interfering, cationic ion pairing reagents and cationic ion pairing reagent systems having volatile combustion products with at most halide, O or S atoms and their combinations as heteroatoms are disclosed that can be used in analytical techniques utilizing element specific detectors. The cationic ion pairing reagents and cationic ion pairing reagent systems have volatile combustion products with at most halide, O or S atoms as heteroatoms. Also, analytical techniques are disclosed using these cationic ion pairing reagents and cationic ion pairing reagent systems.

## Description

### BACKGROUND OF THE INVENTION

### 1. Field of the Invention

The present invention relates to cationic ion pairing reagents and families of cationic ion pairing reagents, where combustion products of the reagents are volatile and include O or S or halogen atoms or combinations thereof as their only heteroatoms, and where the reagents can be used in conjunction with gas-phase or vapor-phase element-specific detectors.

More particularly, the present invention relates to cationic ion pairing reagents and families of cationic ion pairing reagents including a cation and a counterion, where combustion products of the reagents are volatile and include O or S or halogen atoms or combinations thereof as their only heteroatoms, and where the reagents can be used in conjunction with gas-phase or vapor-phase element-specific detectors (ESDs), such as nitrogen-selective gas-phase chemiluminescence detectors, nitrogen-phosphorus thermoionic detectors, atomic emission plasma detectors, inductively-coupled plasma -mass spectrometric (ICP-MS) detectors, element-specific GC detectors such as nitrogen or phosphorus specific GC detectors, *etc.*

### 2. Description of the Related Art

In order to form a cationic ion pairing reagent, a cation with a hydrophobic portion and a counterion, an anion must be present. Typically, the hydrophobicity of the counterion is low to promote the interaction of the anionic analytes and the cationic pairing ions. The counterion of the cationic pairing ion can be derived either from strong electrolytes or weak electrolytes.

The typical cationic ion pairing reagents are derived from weak bases (*i.e.*, bases with pK_{b} values in the 2 to 10 range) or strong bases and contain sufficiently hydrophobic alkyl, cycloalkyl, aryl or alkylaryl moieties. Typically, the weak base-derived cationic pairing ions are primary, secondary or tertiary ammonium ions; while the strong base-derived cationic pairing ions are quaternary ammonium ions and phosphonium ions. The counterions are typically inorganic anions, such as hydroxide ions, halide ions, oxyhalide ions, sulfate ions, bisulfate ions, sulfite ions, bisulfite ions, nitrate ions, nitrite ions, phosphate ions, hydrogen phosphate ions, dihydrogen phosphate ions, carbonate ions, bicarbonate ions or borate ions, or organic anions, such as carboxylate ions, phenolate ions, sulfonate ions, organic sulfate ions or organoboronate ions. Typically, ion pairing reagent compositions that contain only strong electrolyte ions are preferred, because they do not significantly alter the pH of the solutions that comprise them, and because they typically do not participate in acid-base reactions.

The use of amines or quaternary ammonium compounds as cationic pairing ions with nitrogen-selective detectors is undesirable, because they contribute a high background signal level. Phosphonium cations are also undesirable with gas-phase ESDs, because their combustion products are not sufficiently volatile to leave the gas-phase detector systems as vapors or gases and contaminate the detector systems.

Thus, there is a need in the art for cationic ion pairing reagents and cationic ion pairing reagent systems whose combustion products are volatile and do not significantly interfere with post-combustion element-specific detection.

### SUMMARY OF THE INVENTION

The present invention provides cationic ion pairing reagent compositions, whose combustion products are volatile and include O or S or halogen atoms or combinations thereof as their only heteroatoms, and where the reagents can be used in conjunction with gas-phase or vapor-phase, element-specific detectors (ESDs), such as nitrogen-selective gas-phase chemiluminescence detectors, atomic emission plasma detectors, inductively-coupled plasma mass spectrometric (ICP-MS) detectors, element-specific GC detectors such as nitrogen or phosphorus specific GC detectors, *etc.*

The present invention also provides qualitative or quantitative analytical applications using the cationic ion pairing reagents of this invention for determination of an analyte, including chromatographic, electrophoretic or extractive separation or flow-injection analysis of analytes which contain heteroatoms other than O or S or halogen atoms or combinations thereof or chromatographic, electrophoretic or extractive separation or flow-injection analysis of analytes that in addition to O or S or halogen atoms or their combinations contain heteroatoms other than O or S or halogen atoms or their combinations detected by coupled gas-phase or vapor-phase element-specific detectors.

The present invention also provides cationic ion pairing reagent compositions including a cation and a counterion, where the cation has a hydrophobic portion and a hydrophilic portion, and where combustion products of the cation and the counterion are volatile and have only O or S or halogen atoms or combinations thereof as heteroatoms.

The present invention also provides cationic ion pairing reagent compositions formed *in situ* from a strong base and a strong and/or weak acid which react to form a cation and a counterion of this invention, where the cation has a hydrophobic portion and a hydrophilic portion, and where combustion products of the cation and the counterion are volatile and have only O or S or halogen atoms or combinations thereof as heteroatoms.

The present invention also provides a cationic ion pairing reagent system covering a desired hydrophobicity range including e.g further comprising a plurality of cationic ion pairing reagents or *in situ* formed pairing ions of this invention.

The present invention also provides cationic ion pairing reagent compositions including a cation selected from the group consisting of oxonium, sulfonium or sulfoxonium ions and mixtures or combinations thereof having volatile combustion products wherein the combustion products include O or S or halogen atoms or combinations thereof as their only heteroatoms.

The present invention also provides cationic ion pairing reagent compositions including a counterion selected from the group consisting of: inorganic anions such as hydroxide, halide, oxyhalide, sulfate, bisulfate, sulfite, bisulfite, carbonate, or bicarbonate ions having volatile combustion products; or organic anions, such as carboxylate, phenolate, sulfonate or organic sulfate (R-O-S(O)₂-O⁻) ions having volatile combustion products, wherein the combustion products of the counterions include O or S or halogen atoms or combinations thereof as their only heteroatoms.

For *in situ* formed pairing ions, the bases are selected from the group consisting of oxonium, sulfonium, or sulfoxonium ions and mixtures or combinations thereof having volatile combustion products with only O, or S, or halogen atoms or combinations thereof as heteroatoms, and the acids are selected from the group consisting of acids based on halide, oxyhalide, sulfate, bisulfate, sulfite, bisulfite, carbonate, or bicarbonate ions having volatile combustion products; or acids based on organic anions, such as carboxylate, phenolate, sulfonate or organic sulfate (R-O-S(O)₂-O⁻) ions and mixtures or combinations there of having volatile combustion products with only O or S or halogen atoms or combinations thereof as heteroatoms.

The present invention also provides an analytical system for detecting an analyte, where the system includes a combustion zone in which a sample including at least one analyte and at least one cationic pairing ion of this invention, is converted to its corresponding combustion products and a detector capable of detecting at least one of the analyte combustion products.

The present invention also provides a method including the steps of dissolving a sample comprising at least one analyte in a solution comprising at least one cationic ion pairing reagent of this invention, combusting the solution and the sample to their corresponding combustion products and detecting at least one analyte combustion product.

The present invention also provides a method including the steps of dissolving a sample comprising at least one analyte in a solution comprising at least one cationic ion pairing reagent of this invention, combusting the solution and the sample to their corresponding combustion products, converting one or more analyte combustion product into a transformate and detecting at least one transformate.

The present invention also provides a method for forming a cationic ion pairing reagent in situ including the steps of dissolving at least one base having a hydrophobic portion in a solvent to form a solution, adding a strong and/or weak acid to the solution to convert the base into a cationic pairing ion to be used according to the present invention, where combustion products of the acid and base are volatile and have only O or S or halogen atoms or combinations thereof as heteroatoms.

The present invention also provides an analytical system for detecting an analyte including a separation apparatus that separates a sample comprising an analyte or a plurality of analytes and at least one cationic ion pairing reagent or *in situ* formed cationic pairing ion of this invention, a combustion zone where each constituent is converted to its corresponding combustion products and a detector capable of detecting at least one analyte combustion product.

The present invention also provides an analytical system for detecting an analyte including a separation apparatus that separates a sample comprising an analyte or a plurality of analytes and at least one cationic ion pairing reagent or *in situ* formed cationic pairing ion of this invention, a combustion zone where each constituent is converted to its corresponding combustion products, a transformation zone where at least one analyte combustion product is converted into a transformate and a detector capable of detecting at least one transformate.

The present invention also provides an analytical system for detecting an analyte including a separation apparatus that separates a solution comprising an analyte or a plurality of analytes and at least one cationic ion pairing reagent or *in situ* formed cationic pairing ion of this invention, a combustion zone where each constituent is converted to its corresponding combustion products and a detector capable of detecting at least one analyte combustion product.

The present invention also provides an analytical system for detecting an analyte including a separation apparatus that separates a solution comprising an analyte or a plurality of analytes and at least one cationic ion pairing reagent or *in situ* formed cationic pairing ion of this invention, a combustion zone where each constituent is converted to its corresponding combustion products, a transformation zone where at least one analyte combustion product is converted into a transformate and a detector capable of detecting at least one transformate.

### DESCRIPTION OF THE DRAWINGS

The invention can be better understood with reference to the following detailed description together with the appended illustrative drawings in which like elements are numbered the same:

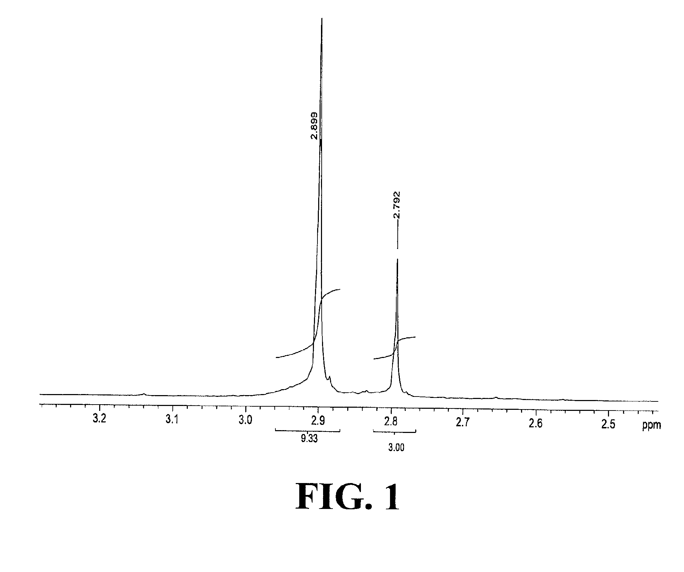

Figure 1 graphically depicts the 300 MHz ¹H NMR spectrum of the D₂O solution of trimethylsulfonium methanesulfonate, a typical, cationic ion pairing reagent composition of the present invention whose combustion products are volatile and contain, at most O and S atoms as heteroatoms.

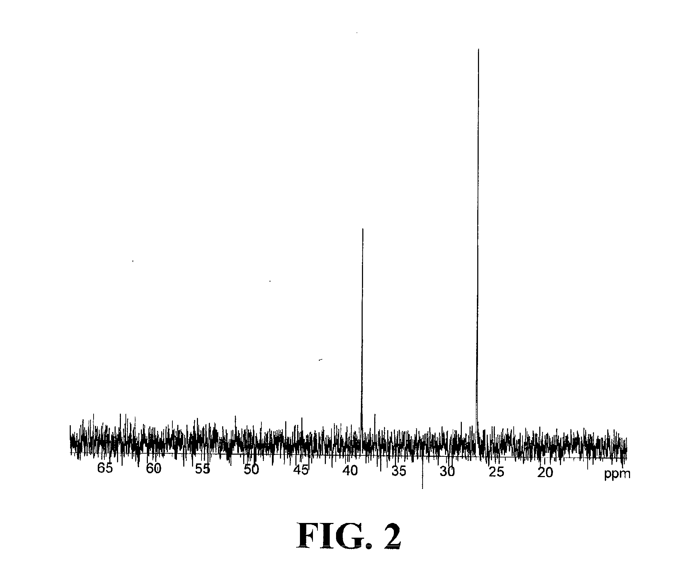

Figure 2 graphically depicts the 75 MHz ¹H NMR spectrum of the D₂O solution of trimethylsulfonium methanesulfonate, a typical, cationic ion pairing reagent composition of the present invention whose combustion products are volatile and contain, at most O and S atoms as heteroatoms.

### DETAILED DESCRIPTION OF THE INVENTION

The inventor has found that a new class of cationic ion pairing reagents and cationic ion pairing reagent systems can be constructed that allow element specific detection of analytes without the typical contamination of the analytes by the combustion products of the cationic ion pairing reagent components that contain a desired detectable element or lack the needed volatility to pass through the analytical system without fouling the system. The cationic ion pairing reagent compositions that have volatile combustion products and include only O or S or halogen atoms or their combinations as the only heteroatoms make possible the use of ESDs in areas which hitherto have been unaccessible to ESDs, because prior art cationic ion pairing reagent compositions included undesired heteroatoms (*e.g.*, nitrogen atoms in protonated amines and quaternary ammonium compounds), or atoms whose combustion products are nonvolatile, cannot leave the analytical system component such as the ESDs as vapors or gases thereby contaminating the components such as the ESDs (*e.g.*, phosphorus atoms in phosphonium compounds and orangophosphates or metals).

The present invention broadly relates to cationic ion pairing reagents and families of cationic ion pairing reagents or *in situ* formed cationic pairing ions or families of *in situ* formed cationic pairing ions whose combustion products are volatile and have only O or S or halogen atoms or their combinations as heteroatoms, where the reagents or *in situ* formed cationic pairing ions can be used in conjunction with gas-phase or vapor-phase element-specific detectors.

Although the reagents are designed for use primarily in aqueous solution, where the solvent in water, the reagents can also be used with non-aqueous or mixed aqueous /non-aqueous solvent systems such as solvent systems including, water, a lower alcohol, a lower carboxylic acid, a lower ether, a lower cyclic ether, a lower ester, a lower ketone, a lower halocarbon, and/or a lower hydrocarbon or mixtures and combinations thereof. The term lower means that the compounds have 10 or fewer carbon atoms, preferably 8 or fewer carbon atoms and particularly 6 or fewer carbon atoms. All of the solvents for use in this invention must have volatile combustion products with O or S or halogen atoms or combinations thereof as their only heteroatoms.

The present invention also relates to cationic ion pairing reagent systems capable of covering a desired hydrophobicity range including a plurality of cationic ion pairing reagents or families of cationic ion pairing reagents or *in situ* formed cationic pairing ions or families of *in situ* formed cationic pairing ions of this invention.

The present invention also relates to an analytical system for detecting an analyte including a combustion chamber where an analyte dissolved in a solution comprising at least one cationic ion pairing reagent or *in situ* formed cationic pairing ion of this invention is converted to its corresponding combustion products and a detector capable of detecting at least one analyte combustion product.

The present invention also relates to a method including the steps of dissolving a sample including at least one analyte in a solution comprising at least one cationic ion pairing reagent or *in situ* formed cationic pairing ion of this invention, combusting the solution and the sample into their corresponding combustion products and detecting at least one combustion product of the analyte.

The present invention also relates to an analytical system for detecting an analyte including a separation apparatus where a sample comprising at least one analyte dissolved in a solution comprising at least one cationic ion pairing reagent or *in situ* formed cationic pairing ion of the present invention is separated into its constituents, a combustion chamber where each constituent of the sample is converted to its corresponding combustion products and a detector capable of detecting at least one analyte combustion product.

The cationic ion pairing reagents or reagent systems or *in situ* formed cationic pairing ions or cationic pairing ion sytems of this invention are characterized by at least the following properties: (1) each combustion product of each cationic ion pairing reagent or *in situ* formed cationic pairing ion is volatile at the operating conditions of the detection system and includes only O or S or halogens atoms or their combinations as heteroatoms; (2) each cationic ion pairing reagent or *in situ* formed cationic pairing ion includes a hydrophobic portion; (3) each cationic ion pairing reagent or *in situ* formed cationic pairing ion provides adequate ion pairing ability over its application range; and (4) each cationic ion pairing reagent or *in situ* formed cationic pairing ion permits variation of the solubility, hydrophobicity and/or electrophoretic mobility of the counterion(s) to match the requirements or constraints of the analytical system used.

A cationic ion pairing reagent of this invention comprises a strong base-derived cation and a weak acid-derived or a strong acid-derived anionic counterion. An *in situ* formed cationic pairing ion is derived from a strong base and a weak or a strong acid.

Suitable cationic pairing ions for use in the construction of the cationic ion pairing reagents of this invention include cations having a hydrophilic portion and a hydrophobic portion, where the hydrophobic portion is sufficient to impart a desired hydrophobicity to the cation, and where the cations form volatile combustion products and the combustion products include only O or S or halogen atoms or their combinations as heteroatoms at the operating conditions of the detection system.

Suitable hydrophobic portions or groups include, without limitation, alkyl, alkenyl, alkynyl, cycloalkyl, cycloalkenyl, cycloalkynyl, aromatic groups, halogenated derivatives thereof or mixtures or combinations thereof, and suitable hydrophilic portions or groups include, without limitation, one or more oxonium, one or more sulfonium or one or more sulfoxonium moieties or mixtures or combinations thereof; all having volatile combustion products at the operating conditions of the detection system and where the combustion products include O or S or halogen atoms or combinations thereof as their only heteroatoms.

Exemplary cations for use in the cationic ion pairing reagents of this invention include, without limitation:

oxonium ions with alkyl, alkenyl, alkynyl, cycloalkyl, cycloalkenyl, cycloalkynyl or aromatic groups and halogenated derivatives thereof with one oxonium moiety;

oxonium ions with alkyl, alkenyl, alkynyl, cycloalkyl, cycloalkenyl, cycloalkynyl or aromatic groups and halogenated derivatives thereof with two or more oxonium moieties;

sulfonium ions with alkyl, alkenyl, alkynyl, cycloalkyl, cycloalkenyl, cycloalkynyl or aromatic groups and halogenated derivatives thereof with one sulfonium moiety;

sulfonium ions with alkyl, alkenyl, alkynyl, cycloalkyl, cycloalkenyl, cycloalkynyl or aromatic groups and halogenated derivatives thereof with two or more sulfonium moieties;

sulfoxonium ions with alkyl, alkenyl, alkynyl, cycloalkyl, cycloalkenyl, cycloalkynyl or aromatic groups and halogenated derivatives thereof with one sulfoxonium moiety;

sulfoxonium ions with alkyl, alkenyl, alkynyl, cycloalkyl, cycloalkenyl, cycloalkynyl or aromatic groups and halogenated derivatives thereof with two or more sulfoxonium moieties;

or mixtures or combinations thereof;

where all cations form volatile combustion products at the operating conditions of the etection system and include only O or S or halogen atoms or combinations thereof as their heteroatoms.

Exemplary bases for *in situ* formed cationic pairing ions of this invention include, without limitation:

the hydroxide forms of oxonium ions with alkyl, alkenyl, alkynyl, cycloalkyl, cycloalkenyl, cycloalkynyl or aromatic groups and halogenated derivatives thereof with one oxonium moiety;

the hydroxide forms of oxonium ions with alkyl, alkenyl, alkynyl, cycloalkyl, cycloalkenyl, cycloalkynyl or aromatic groups and halogenated derivatives thereof with two or more oxonium moieties;

the hydroxide forms of sulfonium ions with alkyl, alkenyl, alkynyl, cycloalkyl, cycloalkenyl, cycloalkynyl or aromatic groups and halogenated derivatives thereof with one sulfonium moiety;

the hydroxide forms of sulfonium ions with alkyl, alkenyl, alkynyl, cycloalkyl, cycloalkenyl, cycloalkynyl or aromatic groups and halogenated derivatives thereof with two or more sulfonium moieties;

the hydroxide forms of sulfoxonium ions with alkyl, alkenyl, alkynyl, cycloalkyl, cycloalkenyl, cycloalkynyl or aromatic groups and halogenated derivatives thereof with one sulfoxonium moiety;

the hydroxide forms of sulfoxonium ions with alkyl, alkenyl, alkynyl, cycloalkyl, cycloalkenyl, cycloalkynyl or aromatic groups and halogenated derivatives thereof with two or more sulfoxonium moieties;

or mixtures or combinations thereof;

where all cations form volatile combustion products at the operating conditions of the detection system and include only O or S or halogen atoms or combinations thereof as their heteroatoms.

Suitable anionic counterions for use in the construction of the cationic ion pairing reagents of this invention include, without limitation, hydroxide, halide, oxyhalide, sulfate, bisulfate, sulfite, bisulfite, carbonate, bicarbonate, carboxylate, phenolate, sulfonate or organic sulfate half ester ions or mixtures or combinations thereof, where all counterions form volatile combustion products at the operating conditions of the detection system with at most halide, or S atoms or their combinations as heteroatoms.

Preferred cationic pairing ions for use in the construction of cationic ion pairing reagents of this invention having volatile combustion products at the operating conditions of the detection system with at most halide, O or S atoms or their combinations as heteroatoms include, without limitation, aryl pyrillium ions, R¹, R², R³-sulfonium ions, or R¹, R², R³-sulfoxonium ions or mixtures or combinations thereof, where R¹, R² and R³ are the same or different and are an alkyl group, cycloalkyl group, alkylcycloalkyl group, alkylaryl group, cycloalkylaryl group, arylalkyl group, arylcycloalkyl group or aryl group. Generally, the R' groups (i=1,2 or 3) have one or more carbon atom, preferably, two or more carbon atoms, particularly, three or more carbon atoms, and especially four or more carbon atoms. For *in situ* formed cationic ion pairs, the corresponding bases are preferred.

Preferred counterions for use in the construction of cationic ion pairing reagents of this invention having volatile combustion products at the operating conditions of the detection system with at most halide, O or S atoms or their combinations as heteroatoms include, without limitation, sulfate, sulfonate or organic sulfate ions and mixtures or combinations thereof. Generally, the sulfonate or organic sulfate ions have fewer than 20 carbon atoms, preferably, fewer than 10 carbon atoms, particularly, fewer than 5 carbon atoms, and especially fewer than 2 carbon atoms to adjust the solubility, hydrophobic - hydrophilic balance and/or electrophoretic mobility of the counterion.

Exemplary examples of the cationic pairing ions for use in the construction of cationic ion pairing reagents of this invention having volatile combustion products at the operating conditions of the detection system with at most halide, O or S atoms or their combinations as heteroatoms include, without limitation, dialkylmethylsulfonium ions where the alkyl chain contains more than two carbon atoms and can be obtained from the respective alkyl sulfides and methyl iodide, dimethylalkylsulfonium ions where the alkyl chain contains more than two carbon atoms and can be obtained from dimethyl sulfide and the respective alkyl iodide, diethylalkylsulfonium ions where the alkyl chain contains more than two carbon atoms and can be obtained from diethyl sulfide and the respective alkyl iodide, dipropylalkylsulfonium ions where the alkyl chain contains more than two carbon atoms and can be obtained from dipropyl sulfide and the respective alkyl iodide, dibutylalkylsulfonium ions where the alkyl chain contains more than two carbon atoms and can be obtained from dibutyl sulfide and the respective alkyl iodide, dipentylalkylsulfonium ions where the alkyl chain contains more than two carbon atoms and can be obtained from dipentyl sulfide and the respective alkyl iodide, dihexylalkylsulfonium ions where the alkyl chain contains more than two carbon atoms and can be obtained from dihexyl sulfide and the respective alkyl iodide, dialkylmethylsulfoxonium ions where the alkyl chain contains more than two carbon atoms and can be obtained from the respective alkyl sulfoxides and methyl iodide, dimethylalkylsulfoxonium ions where the alkyl chain contains more than two carbon atoms and can be obtained from dimethyl sulfoxide and the respective alkyl iodide, diethylalkylsulfoxonium ions where the alkyl chain contains more than two carbon atoms and can be obtained from diethyl sulfoxide and the respective alkyl iodide, dipropylalkylsulfoxonium ions where the alkyl chain contains more than two carbon atoms and can be obtained from dipropyl sulfoxide and the respective alkyl iodide, dibutylalkylsulfoxonium ions where the alkyl chain contains more than two carbon atoms and can be obtained from dibutyl sulfoxide and the respective alkyl iodide, dipentylalkylsulfoxonium ions where the alkyl chain contains more than two carbon atoms and can be obtained from dipentyl sulfoxide and the respective alkyl iodide, dihexylalkylsulfoxonium ions where the alkyl chain contains more than two carbon atoms and can be obtained from dihexyl sulfoxide and the respective alkyl iodide. For *in situ* formed cationic pairing ions, the respective bases are preferred.

Exemplary examples of the counterions for use in the construction of cationic ion pairing reagents of this invention having volatile combustion products at the operating conditions of the detection system with at most halide, O or S atoms or their combinations as heteroatoms include, without limitation, methanesulfonate ion, which can be obtained from methanesulfonic acid, and ethanesulfonate ion, which can be obtained from ethanesulfonic acid. For *in situ* formed cationic pairing ions, the respective acids are preferred.

The cationic ion pairing reagents of this invention can be produced in a number of ways, including, without limitation: (1) the reaction of the parent base of a respective cationic pairing ion with the parent acid of a desired counterion; (2) the percolation of the parent base of a respective cationic pairing ion or its salt through an anion exchange column that contains the desired counterion; or (3) the extraction of a respective ion pair with an organic solvent from an aqueous solution that holds a mixture of the parent base of the respective cationic pairing ion or its salt and the parent acid of a desired counterion or its salt. The ion pairing reagents of this invention can be stored and/or used either as solids or solutions.

*In situ* formed cationic pairing ions of this invention can be produced in a number of ways, including, without limitation: (1) adding one or more desired base to a solution containing a desired weak and/or strong acid and (2) adding a desired weak and/or strong acid to a solution containing one or more desired base.

All references cited herein are incorporated by reference. While this invention has been described fully and completely, it should be understood that the invention may be practiced otherwise than as specifically described. Although the invention has been disclosed with reference to its preferred embodiments, from reading this description those of skill in the art may appreciate changes and modification that may be made which do not depart from the scope and spirit of the invention as described above.

## Claims

1. An cationic pairing composition comprising:
at least one cation; and
at least one counterion,
where the cations and counterions have volatile combustion products including O or S or halogen atoms or combinations thereof as their only heteroatoms.

2. A composition as claimed in claim 1, wherein the cation has a desired hydrophobicity.

3. A composition as claimed in claim 1 or 2, wherein:
the cation is selected from the group consisting of oxonium ions, sulfonium ions, sulfoxonium ions, and mixtures and combinations thereof; and
the counterion is selected from the group consisting of hydroxide, halide, oxyhalide, sulfate, bisulfate, sulfite, bisulfite, carbonate, bicarbonate carboxylate, phenolate, sulfonate, organosulfate ions and mixtures and combinations thereof.

4. A composition as claimed in any one of the preceding claims comprising:
a plurality of counterions,
where each counterion has volatile combustion productions including O or S or halogen atoms or combinations thereof as their only heteroatoms.

5. A composition as claimed in any one of the preceding claims, comprising:
a plurality of cations,
where each cation has volatile combustion productions including O or S or halogen atoms or combinations thereof as their only heteroatoms.

6. A composition as claimed in any one of the preceding claims comprisîng:
a plurality of cations; and
a plurality of counterions,
where each cation and counterion have volatile combustion productions including O or S or halogen atoms or combinations thereof as their only heteroatoms.

7. A composition as claimed in claim 6, wherein the composition covers a desired hydrophobicity range.

8. A composition as claimed in claim 6, wherein:
the cations are selected from the group consisting of oxonium ions, sulfonium ions, sulfoxonium ions and mixtures and combinations thereof; and
the counterions are selected from the group consisting of hydroxide, halide, oxyhalide, sulfate, bisulfate, sulfite, bisulfite, carbonate, bicarbonate, carboxylate, phenolate, sulfonate, organosulfate ions and mixtures and combinations thereof.

9. A cationic ion pairing composition for use in element-specific detection systems comprising a solution comprising:
a solvent;
a cation selected from the group consisting of oxonium ions, sulfonium ions, sulfoxonium ions and mixtures and combinations thereof; and
a counterion selected from the group consisting of hydroxide, halide, oxyhalide, sulfate, bisulfate, sulfite, bisulfite, carbonate, bicarbonate, carboxylate, phenolate, sulfonate, organosulfate ions and mixtures and combinations thereof,
where the cation and counterion and the solvent have volatile combustion products including O or S or halogen atoms or combinations thereof as their only heteroatoms.

10. A composition as claimed in claim 9, wherein the cation has a desired hydrophobicity.

11. A cationic ion pairing composition for use in element-specific detection systems comprising:
a solvent;
a plurality of cations selected from the group consisting of oxonium ions, sulfonium ions, sulfoxonium ions and mixtures and combinations thereof; and
a plurality of counterions selected from the group consisting of hydroxide, halide, oxyhalide, sulfate, bisulfate, sulfite, bisulfite, carbonate, bicarbonate, carboxylate, phenolate, sulfonate, organosulfate ions and mixtures and combinations thereof,
where the cations and the counterions and the solvent have volatile combustion products including O or S or halogen atoms or combinations thereof as their only heteroatoms.

12. A composition as claimed in claim 11, wherein the cations cover a desired hydrophobicity range.

13. An apparatus for detecting an analyte comprising:
a separation component where a sample is separated into its components, where the sample comprises at least one analyte and at least one cation and at least one counterion, where the cations and counterions have volatile combustion products including O or S or halogen atoms or combinations thereof as their only heteroatoms and where at least one combustion product of the analyte is detectable;
a combustion zone where the sample is converted to its corresponding combustion products;
a gas-phase or vapor-phase element-specific detector (ESD) capable of detecting the at least one analyte combustion product.

14. An apparatus as claimed in claim 13, further comprising:
a transformation zone where at least one sample combustion product is converted into a transformate and a detector capable of detecting at least one transformate.

15. An apparatus as claimed in claim 13 or 14, wherein the ESD is selected from the group consisting of nitrogen-selective gas-phase chemiluminescence detectors, sulfur-selective gas-phase chemiluminescence detectors, nitrogen-phosphorus thermoionic detectors, atomic emission plasma detectors, inductively-coupled plasma - mass spectrometric (ICP-MS) detectors, and element-specific GC detectors such as nitrogen or phosphorus specific GC detectors.

16. An apparatus as claimed in any one of claims 13 to 15, wherein the cation has a desired hydrophobicity.

17. An apparatus as claimed in any one of claims 13 to 16, wherein the cations cover a desired hydrophobicity range.

18. An apparatus as claimed in any one of claims 13 to 17, wherein:
the cation is selected from the group consisting of oxonium ions, sulfonium ions, sulfoxonium ions and mixtures and combinations thereof; and
the counterion is selected from the group consisting of hydroxide, halide, oxyhalide, sulfate, bisulfate, sulfite, bisulfite, carbonate, bicarbonate, carboxylate, phenolate, sulfonate, organosulfate ions and mixtures and combinations thereof.

19. A method for analysing an analyte comprising the steps of:
introducing a sample comprising at least one analyte and at least one cation and at least one counterion into a combustion zone, where the cations and counterions have volatile combustion products including O or S or halogen atoms or combinations thereof as their only heteroatoms;
converting the sample, in the combustion zone, into its corresponding volatile combustion products including at least one analyte combustion product;
measuring the at least one analyte combustion product with a gas-phase or vapor-phase element-specific detector to produce a detector signal; and
determinating an analyte concentration in the sample from the detector signal.

20. A method as claimed in claim 19, further comprising the step of:
converting the at least one analyte combustion product into a transformate; and
detecting the transformate.

21. A method as claimed in claim 19 or 20, wherein the cation has a desired hydrophobicity.

22. A method as claimed in claim 19, 20 or 21, wherein the cations cover a desired hydrophobicity range.

23. A method as claimed in any one of claims 19 to 22, wherein:
the cations are selected from the group consisting of oxonium ions, sulfonium ions, sulfoxonium ions and mixtures and combinations thereof; and
the counterions are selected from the group consisting of hydroxide, halide, oxyhalide, sulfate, bisulfate, sulfite, bisulfite, carbonate, bicarbonate, carboxylate, phenolate, sulfonate, organosulfate ions and mixtures and combinations thereof.

24. A method for forming a cationic ion pairing reagent *in situ* comprising the steps of:
dissolving a base form of a cation in a solvent to form a solution, where the base form of the cation has volatile combustion products including O or S or halogen atoms or mixtures and combinations thereof as their only heteroatoms;
adding an amount of an acid form of a counterion to the solution, where the acid form of the counterion has volatile combustion products including O or S or halogen atoms or mixtures and combinations thereof as their only heteroatoms, and where the amount is sufficient to convert substantially all of the base form of the cation to its corresponding cation to form an *in situ* formed cationic ion pairing reagent; and
adding a sample comprising at least one analyte to the solution containing the *in situ* formed cationic ion pairing reagent.

25. A method as claimed in claim 24, wherein the cation has a desired hydrophobicity.

26. A method as claimed in claim 24 or 25, wherein the cations cover a desired hydrophobicity range.

27. A method as claimed in any one of claims 24 to 26, wherein:
the cation is selected from the group consisting of oxonium ions, sulfonium ions, sulfoxonium ions and mixtures and combinations thereof; and
the counterion is selected from the group consisting of hydroxide, halide, oxyhalide, sulfate, bisulfate, sulfite, bisulfite, carbonate, bicarbonate, carboxylate, phenolate, sulfonate, organosulfate ions and mixtures and combinations thereof.
